(19)

**Europäisches Patentamt**
**European Patent Office**
**Office européen des brevets**

(11)  **EP 4 772 559 A1**

(12)  **EUROPEAN PATENT APPLICATION**
published in accordance with Art. 153(4) EPC

(43) Date of publication:
08.07.2026 Bulletin 2026/28

(21) Application number: 24859559.7

(22) Date of filing: 21.08.2024

(51) International Patent Classification (IPC):
*C08G 63/183* (2006.01)    *C08G 63/123* (2006.01)

(52) Cooperative Patent Classification (CPC):
C08G 63/123; C08G 63/183

(86) International application number:
PCT/JP2024/029566

(87) International publication number:
WO 2025/047526 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023 JP 2023140521

(71) Applicants:
• Bell Polyester Products, Inc.
Yamaguchi 747-0823 (JP)

• Daiwa Can Company
Tokyo 100-7009 (JP)

(72) Inventors:
• MISAKA, Ryota
Houfu-shi, Yamaguchi 747-0823 (JP)
• OKIMOTO, Masaya
Houfu-shi, Yamaguchi 747-0823 (JP)
• KATSUMA, Keita
Houfu-shi, Yamaguchi 747-0823 (JP)

(74) Representative: Henkel & Partner mbB
Patentanwaltskanzlei, Rechtsanwaltskanzlei
Maximiliansplatz 21
80333 München (DE)

(54) **POLYESTER RESIN AND METHOD FOR PRODUCING SAME, AND MOLDED BODY AND METHOD FOR PRODUCING SAME**

(57)    A polyester resin includes a first copolymer which the first copolymer acquired by polymerizing an acid component including 50 mol% or greater of an aromatic dicarboxylic acid component and 2 mol% to 50 mol% of a dimer acid component, with respect to the total amount of the acid component, and an alcohol component including 50 mol% or greater of a 1,4-butanediol component, with respect to the total amount of the alcohol component. Tetrahydrofuran generated when the first copolymer is heated at 150°C for one hour is 1 μg or lower per 1 g of the first copolymer. The acid component preferably consists of a terephthalic acid component and a dimer acid component, or a 2,6-naphthalenedicarboxylic acid component and a dimer acid component.

EP 4 772 559 A1

## Description

Cross Reference to Related Applications

The present application is based upon and claims the benefit of the priority of Japanese Patent Application No. 2023-140521 (filed on August 30, 2023), the entire of which is incorporated herein in its entirety by reference.

Technical Field

The present disclosure relates to a polyester resin and a method for producing the same, and a molded body and a method for producing the same.

Background Art

Polybutylene terephthalate (may be referred to as "PBT" in the present disclosure) and polybutylene naphthalate (may be referred to as "PBN" in the present disclosure) are used in various applications such as electric/electronic materials, automotive parts, and packaging materials.

When PBT and PBN are produced, tetrahydrofuran (may be referred to as "THF" in the present disclosure) remains as a byproduct in the produced resin. The remaining THF is generated as outgas. The generated THF outgas may adversely affect the processing of electric/electronic materials, deteriorate the resistance of automotive parts, or contaminate the items to be packaged. Moreover, THF outgas may damage the health of workers.

In the automotive interior part described in Patent Literature 1, a copolymer of ethene and (2-ethyl) hexyl acrylate is mixed with PBT to reduce the generation amount of THF outgas.

In Patent Literature 2, the generation amount of THF outgas is reduced by using a biaxially stretched film including a modified PBT in which polytetramethylene glycol is copolymerized with PBT, and polyethylene terephthalate.

Citation List

Patent Literature

Patent Literature 1: Japanese Translation of PCT International Application Publication No. 2022-543761A
Patent Literature 2: International Publication No. WO2011/162198A

Summary of Invention

Technical Problem

In the method described in Patent Literature 1, the THF content included in PBT cannot be reduced. In the modified PBT described in Patent Literature 2, 220 $\mu$g/g or greater of THF outgas is generated, and reduction in the THF content is not sufficient.

Therefore, there is a demand for a polyester resin having a reduced THF content.

Solution to Problem

According to a first aspect of the present disclosure, a polyester resin includes a first copolymer which the first copolymer acquired by polymerizing an acid component including 50 mol% or greater of an aromatic dicarboxylic acid component and 2 mol% to 50 mol% of a dimer acid component, with respect to the total amount of the acid component, and an alcohol component including 50 mol% or greater of a 1,4-butanediol component, with respect to the total amount of the alcohol component. Tetrahydrofuran generated when the first copolymer is heated at 150°C for one hour is 1 $\mu$g or lower per 1 g of the first copolymer.

According to a second aspect of the present disclosure, a method for producing a polyester resin is provided, the method comprising a first step of preparing a first copolymer acquired by polymerizing an acid component including 50 mol% or greater of an aromatic dicarboxylic acid and 2 mol% to 50 mol% of a dimer acid component, with respect to the total amount of the acid component, and an alcohol component including 50 mol% or greater of a 1,4-butanediol component, with respect to the total amount of the alcohol component, and a second step of performing heat treatment to the first copolymer under a pressure of 4,000 Pa or lower, at 66°C or greater and a temperature equal to or lower than the melting point of the first copolymer.

According to a third aspect of the present disclosure, a molded body including the polyester resin according to the first aspect is provided.

According to a fourth aspect of the present disclosure, a molded body is provided, the molded body including 5% by mass to 70% by mass of the polyester resin according to the first aspect, and 30% by mass to 95% by mass of a second copolymer. The second copolymer is a polyester resin including at least one selected from a group consisting of 1,4-butane diol and polytetramethylene glycol as an alcohol component. Tetrahydrofuran generated when the molded body is heated at 150°C for one hour is 50 $\mu$g or lower per 1 g of the molded body.

According to a fifth aspect of the present disclosure, a method for producing a molded body is provided, the method comprising a first step of preparing a first copolymer acquired by polymerizing an acid component including 50 mol% or greater of an aromatic dicarboxylic acid component and 2 mol% to 50 mol% of a dimer acid component, with respect to the total amount of the acid component, and an alcohol component including 50 mol% or greater of a 1,4-butanediol component, with respect to the total amount of the alcohol component, a second step of performing heat treatment to the first copolymer under a pressure of 4,000 Pa or lower, at 66°C or greater and a temperature equal to or lower than the melting point of the first copolymer, and a third step of molding a mixture of 5% by mass to 95% by mass of the first copolymer and 5% by mass to 95% by mass of a second copolymer. The second copolymer is a polyester resin including at least one selected from a group consisting of 1,4-butanediol and polytetramethylene glycol as the alcohol component.

Advantageous Effects of Invention

The residual amount of THF of the polyester resin of the present disclosure is small. Therefore, the generation amount of THF outgas to which the workers are exposed upon using the polyester resin of the present disclosure can be reduced. Moreover, deterioration of the quality of the application products due to the generation of THF outgas from the polyester resin can be suppressed.

Brief Description of Drawings

[Fig. 1] Figure 1 is a flowchart showing a method for producing a polyester resin of the present disclosure.
[Fig. 2] Figure 2 is a flowchart showing a method for producing a molded body of the present disclosure.

Description of Embodiments

According to a preferred mode of the first aspect, tetrahydrofuran generated when the first copolymer, to which heat treatment at 50°C or greater is not performed, is heated at 150°C for one hour is 1 $\mu$g or lower per 1 g of the copolymer.

According to a preferred mode of the first aspect, tetrahydrofuran generated when the first copolymer is heated at 150°C for one hour is 0.5 $\mu$g or lower per 1 g of the copolymer.

According to a preferred mode of the first aspect, the acid component consists of a terephthalic acid component and a dimer acid component, or a 2,6-naphthalenedicarboxylic acid component and a dimer acid component. It consists of a terephthalic acid component or a 2,6-naphthalenedicarboxylic acid component and a dimer acid component. The alcohol component consists of a 1,4-butanediol component.

According to a preferred mode of the first aspect, the number of carbon atoms of the dimer acid component is at least one selected from a group consisting of 44 and 36.

According to a preferred mode of the second aspect, heat treatment is performed for 6 hours to 100 hours.

According to a preferred mode of the second aspect, the second step is performed before performing heat treatment to the first copolymer to 50°C or greater.

According to a preferred mode of the second aspect, the acid component consists of a terephthalic acid component and a dimer acid component, or a 2,6-naphthalenedicarboxylic acid component and a dimer acid component. The alcohol component consists of a 1,4-butanediol component.

According to a preferred mode of the second aspect, the number of carbon atoms of the dimer acid component is at least one selected from a group consisting of 44 and 36.

According to a preferred mode of the fourth aspect, in the second copolymer, tetrahydrofuran generated when it is heated at 150°C for one hour is 150 $\mu$g to 600 $\mu$g per 1 g of the polyester resin.

According to a preferred mode of the fourth aspect, the molded body has at least one shape selected from a sheet shape, a film shape, and a container shape.

According to a preferred mode of the third aspect and the fourth aspect, an electric/electronic material including the molded body of the third aspect and the fourth aspect is provided.

According to a preferred mode of the third aspect and the fourth aspect, an automotive part including the molded body of the third aspect and the fourth aspect is provided.

According to a preferred mode of the third aspect and the fourth aspect, a packaging material including the molded body of the third aspect and the fourth aspect is provided.

According to a preferred mode of the fifth aspect, in the third step, the mixture is molded into at least one shape selected from a sheet shape, a film shape, and a container shape.

In the Description and Claims, each acid component and each alcohol component may include a derivative thereof. For example, the acid component may include a derivative of the acid component (e.g., an ester).

A polyester resin according to a first embodiment of the present disclosure is described. The polyester resin as described in the present disclosure may include a molded body thereof (e.g., a polyester film, container, package, etc.). In the present disclosure, a polymer may include a copolymer composed of two types or more of monomer components, and a crosspolymer.

The polyester resin of the present disclosure may be in various forms. For example, the polyester resin of the present disclosure may be in the form of pellets, a sheet, a film, a container, or a package.

The pellets are formed by cutting the prepared strand-shaped polyester resin into particles. The mass of each pellet can be, for example, 2 g to 3 g.

In the present disclosure, a sheet refers to a molded body having a shape in which its thickness is thinner than the dimensions in other directions. In the present disclosure, a film refers to a molded body in which its thickness is extremely thinned by performing heat-drawing processing to a sheet.

In the following, the total amount of a component may indicate a total number of moles of monomers that form the basis of the component.

The polyester resin according to the first embodiment is a first copolymer acquired by polymerizing an an acid component (A) and an alcohol component (B). The polyester resin according to the first embodiment has PBT or PBN as a main structure.

In the present disclosure, the acid component (A) may include a polycarboxylic acid component which is a compound having multiple carboxylic groups and/or a derivative thereof. Moreover, the alcohol component (B) may include a polyol component which is a compound having multiple hydroxy groups (a polyhydroxy compound) and/or a derivative thereof.

[Acid component (A)]

The acid component (A) includes an aromatic dicarboxylic acid component and a dimer acid component.

Examples of the aromatic acid component include a terephthalic acid component, an isophthalic acid component, 2,5-furandicarboxylic acid, 2,4-furandicarboxylic acid, a 1,4-naphthalenedicarboxylic acid component, a 2,6-naphthalenedicarboxylic acid component, a 4,4'-diphenyldicarboxylic acid component, and a 9,9-bis(2-carboxyethyl) fluorene component. Among the above, the terephthalic acid component and the 2,6-naphthalenedicarboxylic acid component are particularly preferred.

The aromatic dicarboxylic acid component may be, for example, 50 mol% or greater, 55 mol% or greater, 60 mol% or greater, 65 mol% or greater, 70 mol% or greater, 75 mol% or greater, 80 mol% or greater, 85 mol% or greater, 90 mol% or greater, or 95 mol% or greater, with respect to the total amount of the component (A). When the aromatic dicarboxylic acid component is less than 50 mol%, the properties of the acquired polyester resin may be lost. The aromatic dicarboxylic acid component may be, for example, 98 mol% or lower, 95 mol% or lower, 92 mol% or lower, 90 mol% or lower, 85 mol% or lower, 80 mol% or lower, 75 mol% or lower, 70 mol% or lower, or 65 mol% or lower, with respect to the total amount of the component (A).

Dimer acid is a dicarboxylic acid compound acquired by dimerizing an unsaturated fatty acid having 10 to 30 carbon atoms. Dimer acid is at least one selected from a group consisting of, for example, a dimerized dicarboxylic acid having 36 and 44 carbon atoms acquired by dimerizing an unsaturated fatty acid having 18 carbon atoms such as oleic acid and linoleic acid, or an unsaturated fatty acid having 22 carbon atoms such as erucic acid, and an ester forming derivative thereof. Dimer acid in which the remaining unsaturated double bond after dimerization is saturated by hydrogenation is called as a hydrogenated dimer acid. From the viewpoints of reaction stability, flexibility, and impact resistance, the hydrogenated dimer acid can be used preferably. Dimer acid is usually acquired as a mixture of a compound having a linearly branched structure and a compound having an alicyclic structure, and although the contents thereof differ according to the production steps, the contents thereof are not particularly limited. Among the above, dimer acid having 44 carbon atoms is preferred since the generation amount of THF outgas can be reduced in a larger amount.

The dimer acid component may be, for example, 2 mol% or greater, 5 mol% or greater, 8 mol% or greater, 10 mo% or greater, 15 mol% or greater, 20 mol% or greater, 25 mol% or greater, 30 mol% or greater, or 35 mol% or greater, with respect to the total amount of the component (A). When the dimer acid component is less than 2 mol%, the generation amount of THF outgas from the polyester resin may become larger. The dimer acid component is preferably 50 mol% or lower with respect to the total amount of the component (A). The dimer acid component may be, for example, 45 mol% or lower, 40 mol% or lower, 35 mol% or lower, 30 mol% or lower, 25 mol% or lower, 20 mol% or lower, 15 mol% or lower, 10 mol% or lower, or 5 mol% or lower, with respect to the total amount of the component (A). When the dimer acid component exceeds 50 mol%, heat resistance of the polyester resin may deteriorate.

The acid component (A) may include an acid component other than the aromatic dicarboxylic acid component and the dimer acid component within a range of not changing the inherent properties of the polyester resin of the present disclosure. Examples of the other acid component include: an aliphatic dicarboxylic acid component such as succinic acid, glutaric acid, adipic acid, pyruvic acid, suberic acid, azelaic acid, and sebacic acid; and an alycylic dicarboxylic acid component such as 1,2-, 1,3-, 1,4-cyclohexanedicarboxylic acid, and 1,4-, 1,5-, 2,6-, 2,7-decahydronaphthalenedicarboxylic acid. These acid components may be used alone, or in combination of two or more types.

In the acid component of the first copolymer, the total amount of the aromatic dicarboxylic acid and the dimer acid component may be 100 mol% with respect to the total amount of the component (A).

[Alcohol component (B)]

The alcohol component (B) includes a 1,4-butanediol component.

The 1,4-butanediol component is preferably 80 mol% or greater, more preferably 85 mol% or greater, further preferably 90 mol% or greater, and particulary preferably 95 mol% or greater, with respect to the total amount of the component (B). The 1,4-butanediol component may be 95 mol% or lower, 90 mol% or lower, or 85 mol% or lower, with respect to the total amount of the component (B). The 1,4-butanediol component may be 100 mol% with respect to the total amount of the component (B). When the 1,4-butanediol component is less than 80 mol%, the properties of PBT may be lost.

The alcohol component (B) may include a component other than the 1,4-butanediol component within a range of not changing the inherent properties of the polyester resin of the present disclosure. Examples of the other alcohol component include an ethylene glycol component, a 1,4-cyclohexanedimethanol component, a propylene glycol component, a hexanediol component, an octanediol component, a decanediol component, an ethylene oxide adduct-type bisphenol A component, an ethelene oxide adduct-type bisphenol S component, and a trimethylolpropane component. These alcohol components may be used alone, or in combination of two or more types.

The polyester resin of the present disclosure may include well-known additives within a range of not changing the inherent properties of the polyester resin of the present disclosure. Examples of the additives include polymerization catalysts, antistatic agents, UV absorbers, thermal stabilizers, light stabilizers, mold-release agents, antioxidants, lubricants, plasticizers, pigments, and dyes.

The generation amount of THF outgas from the polyester resin according to the first embodiment is 1 $\mu$g or lower (1 ppm or lower), preferably 0.8 $\mu$g or lower, more preferably 0.5 $\mu$g or lower, still more preferably 0.4 $\mu$g or lower, particularly preferably 0.3 $\mu$g or lower, more particularly preferably 0.2 $\mu$g or lower, and still more particularly preferably 0.1 $\mu$g or lower, with respect to 1 g of the polyester resin, when the polyester resin is heated at 150°C for one hour in a state that melting processing is not performed after production of the polyester resin, for example, in a state of pellets.

The generation amount of THF outgas from the polyester resin according to the first embodiment becomes smaller in a molded state, for example, a state of a sheet acquired by molding pellets by melt extrusion, and a film acquired by performing heat-drawing processing to a sheet, than the generation amount of THFoutgas in a state of pellets. For example, the generation amount of THF outgas from the molded body when heated at 150°C for one hour may be 0.2 $\mu$g or lower (0.2 ppm or lower), preferably 0.1 $\mu$g or lower (0.1 ppm or lower), and more preferably below the detection limit.

The generation amount of THF outgas generated from the polyester resin of the present disclosure can be measured by a headspace method, for example.

In the polyester resin of the present disclosure, the generation amount of THF outgas is reduced. Accordingly, environmental pollution can be suppressed, and adverse effects to the health of workers can be reduced. Moreover, products to which the polyester of the present disclosure is applied can suppress deterioration in quality due to THF.

For example, when the polyester resin of the present disclosure is used as a mold-release agent in production of semi-conductors, the generation amount of THF outgas is small, so that adhesion between a substrate film and a mold-release layer can be improved. Moreover, in the production steps of semi-conductors, inhibition in a soldering step due to THF can be reduced. Furthermore, adverse effects to the quality of the semi-conductor itself due to THF can also be reduced.

The polyester resin of the present disclosure exhibits little bleed-out, and is excellent in stability over time and moldability. Therefore, the polyester resin of the present disclosure can be applied to a wide range of various molding materials such as electric/electronic materials, automotive parts, or packaging materials, for example.

The polyester resin of the present disclosure is excellent in transparency and flexibility, and high in heat resistance.

The polyester resin according to the first embodiment can be used as a modifier for reducing the generation amount of THF outgas by mixing with other polyester resins. For example, as will be shown in the third embodiment and the fourth embodiment later, by producing a molded body by mixing the polyester resin including THF, and the polyester resin according to the first embodiment, the generation amount of THF outgas from the molded body can be suppressed.

In the polyester resin of the present disclosure, there may be a case that molecular structure or crystal structure is unclear, and it may be impossible or substantially not practical to directy identify the polyester resin of the present disclosure by its composition, structure or property. In such case, the polyester resin of the present disclosure should be allowed to be identified by the production method thereof.

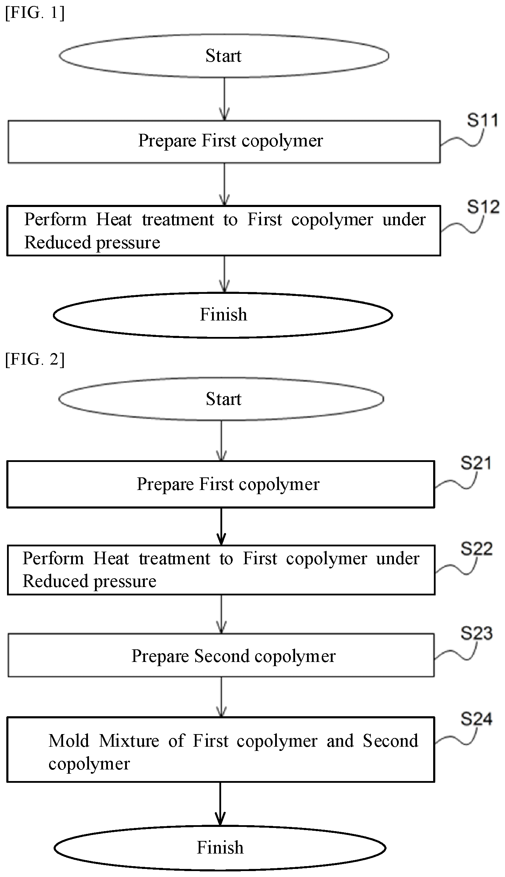

As a second embodiment of the present disclosure, a method for producing the polyester resin according to the first embodiment is described. Figure 1 shows a flow chart of the method for producing the polyester resin according to the second embodiment.

The method for producing the polyester resin according to the second embodiment may comprise a first step (S11) of preparing a polyester resin, and a second step (S12) of performing heat treatment to the polyester resin acquired in the first step.

The polyester resin prepared in the first step may be a commercially available product of a polyester resin having a composition shown in the first embodiment. In the following, a method for producing the polyester resin as a first step is described.

The first step is a step of polymerizing a monomer. That is, it is a step of polycondensing acid and alcohol. Polymerization in the first step is not particularly limited, and may be conducted with well-known polymerization methods using well-known catalysts. The method for producing the polyester resin before the second step may be either of a method of directly esterifying an unsubstituted polycarboxylic acid as a starting raw material, or a method of conducting a transesterification reaction with an esterified product such as dimethyl ester as a starting raw material. In a direct esterification, the temperature of conducting polymerization reaction becomes high, so that decomposition of 1,4-butanediol and the generation amount of THF increase; therefore, it is preferred to conduct a transesterification reaction using an esterified product of polycarboxylic acid. To achieve a sufficient reaction rate upon producing the polyester resin before the second step, it is desirable to conduct a transesterification reaction under normal pressure using a well-known catalyst as a first stage, and then conduct polycondensation reaction under reduced pressure using a well-known catalyst as a following second stage.

The above-described compounds can be used as acid and alcohol, which are the raw materials of the polyester resin. The preparation amount of acid and alcohol can be suitably set depending on the contents of the above-described acid components and alcohol components.

The transesterification reaction may be conducted, for example, by preparing each compound used as polymerization raw materials and other various copolymerization components, used as necessary, in a reaction vessel equipped with a heating apparatus, a stirrer, and a distillation tube, adding a reaction catalyst thereto and raising the temperature while stirring the materials under normal pressure in an inert gas atmosphere, and letting it to react while removing, by distillation, byproducts produced by the reaction, such as methanol. The reaction temperature may be 150°C to 230°C, and preferably 160°C to 220°C. The reaction time may be about 3 to 7 hours.

As a catalyst for transesterification reaction, at least one type or more of a metal compound is used desirably. Examples of preferred metal elements include sodium, potassium, calcium, titanium, lithium, magnesium, manganese, zinc, tin, and cobalt. Among the above, a titanium compound is preferred because it has a high reactivity and good color tone can be achieved in the acquired resin. The usage amount of the transesterification catalyst may be 5 ppm to 1,000 ppm, and preferably 10 ppm to 100 ppm, with respect to the polyester resin to be produced.

Moreover, after completion of the transesterification reaction, it is desirable to add a phosphorus compound, which is equimolar or greater to the transesterification catalyst, to further promote the esterification reaction. For example, it is desirable to produce the polyester resin by conducting the transesterification reaction with an esterified compound of terephthalic acid and 1,4-butanediol, and then further adding erucic acid together with a phosphorous compound to promote the esterification reaction. Examples of the phosphorous compound include phosphoric acid, phosphorous acid, trimethyl phosphate, triethyl phosphate, tributyl phosphate, trimethyl phosphite, triethyl phosphite, and tributyl phosphite. Among the above, trimethyl phosphate is particularly preferred. The rate of addition of the phosphorous compound may be 5 ppm to 1,000 ppm, and preferably 20 ppm to 100 ppm, with respect to the polyester resin to be produced.

Following the transesterification reaction, a polycondensation reaction may be further conducted until a desired molecular weight is achieved. The polycondensation reaction may be conducted, for example, by adding a polymerization catalyst to a reaction tank, to which the product after the transesterification reaction is put into, and then gradually raising the tempreature and reducing the pressure inside the reaction tank. The pressure inside the tank may be reduced from nomal pressure atmosphere to a final pressure of 0.4 kPa or lower, and preferably 0.2 kPa or lower. The temperature inside the tank is raised from 220°C to 230°C to a final temperature of 220°C to 240°C, and preferably 228°C to 235°C, and after it reaches the predetermined torque, the reaction product can be extruded and collected from the bottom of the tank. Usually, the reaction product is extruded into water in strands and then be cut after being cooled, to acquire the polyester resin in the form of pellets.

As the catalyst of the polycondensation reaction, at least one or more type of a metal compound is used desirably. Examples of preferred meal elements include titanium, germanium, antimony, and aluminum. Among the above, a titanium compound and a germanium compound have a high reactivity, and excellent transparency and color tone can be achieved in the acquired resin, so that they are particularly preferred when an optical resin is to be produced. In particular, a titanium compound has a high reactivity, and is cheaper than a germanium compound. Since titanium is not classified as a heavy metal, a titanium compound can reduce environmental burdens. The rate of addition of the polymerization catalyst may be 30 ppm to 1,000 ppm, and preferably 50 ppm to 500 ppm, with respect to the polyester resin to be produced.

The polyester resin of the present disclosure may contain, as appropriate, various additives such as antioxidants, thermal stabilizers, lubricants, antistatic agents, plasticizers, UV absorbers, and pigments can be suitably blended depending on the usage and objective of molding. Moreover, these additive components may be blended either in the polymerization reaction step or the processing/molding step. Examples of antioxidants include hindered phenol-based antioxidants, phosphorous-based antioxidants, and sulfur-based antioxidants. In particular, hindered phenol-based antioxidants are preferably used, and the content is desirably about 100 ppm to 5,000 ppm. Moreover, when molding a melt-extruded film, a metal salt such as magnesium acetate, calcium acetate, and magnesium chloride may be added to stabilize electrostatic adhesion of the cooling roller.

After the polycondensation reaction, a solid-phase polymerization reaction may be conducted. By the solid-phase polymerization reaction, the intrinsic visocity of the polyester resin may be increased.

Next, in the second step, heat treatment is performed to the polyester resin acquired in the first step under reduced pressure.

The pressure at heat treatment is preferably 4,000 Pa or lower, more preferably 3,000 Pa or lower, still more preferably 2,000 Pa or lower, still more preferably 1,000 Pa or lower, particularly preferably 500 Pa or lower, more particularly preferably 400 Pa or lower, still more particularly preferably 300 Pa or lower, most preferably 200 Pa or lower, and still more most preferably 100 Pa or lower.

The temperature of heat treatment is preferably 66°C or greater, and more preferably 70°C or greater. The temperature of heat treatment may be 80°C or greater, 90°C or greater, 100°C or greater, or 110°C or greater. The temperature of heat treatment is preferably equal to or lower than the melting point of the polyester resin, and more preferably 150°C or lower. When the temperature of heat treatment exceeds the melting point, fusion of the resin may occur.

The time of heat treatment may be, for example, 6 hours or more, 10 hours or more, 20 hours or more, 30 hours or more, 40 hours or more, or 50 hours or more. The time of heat treatment may be, for example, 100 hours or less, 90 hours or less, 80 hours or less, 70 hours or less, 60 hours or less, 50 hours or less, 40 hours or less, 30 hours or less, or 20 hours or less.

When the temperature of heat treatment in the second step is less than 100°C, the time of heat treatment is 20 hours or more, preferably 30 hours or more, more preferably 40 hours or more, and still more preferably 50 hours or more. When the temperature of heat treatment in the second step is 100°C or greater, the time of heat treatment is 6 hours or more, preferably 8 hours or more, and more preferably 10 hours or more.

In the second step, heat treatment can be performed to the polyester resin in the form of pellets acquired in the first step, or heat treatment can be performed to the polyester resin in the form of a molded body, such as a film. The second step is preferably performed in the form of pellets continuously from the first step. By performing heat treatment in a primary satge, danger of the worker being exposed to THF can be reduced, and deterioration in mechanical strength and hydrolysis of the polyester resin due to THF can be suppressed. Furthermore, when the polyester resin of the present disclosure is blended with a resin having low resistance to THF, such as polypropylene or polycarbonate, adverse effects to the blended resin can be reduced.

A method for producing a polyester film of the present disclosure is described.

The polyester film of the present disclosure can be produced according to a general method for producing a polyester film. For example, there is a method in which the polyester resin is melted, and after the non-orientated polyester extruded and molded into a sheet is stretched in the direction of travel using the speed difference of the roller at a temperature equal to or greater than the glass transition temperature, it is stretched in the width direction by a tenter, and heat treatment is performed thereto. The thickness of the non-oriented polyester before stretching can be set by considering the final thickness of the target polyester film, the stretching ratio, and retardation of the polyester film to be acquired.

According to the method for producing the polyester resin according to the second embodiment, the polyester resin in which the generation amount of THF outgas upon molding is small can be produced. In particular, the THF content in the polyester resin can be reduced at the time before molding. Accordingly, adverse effects due to THF to the workers handling the polyester resin of the present disclosure can be reduced. Moreover, adverse effects due to THF to the products to which the polyester resin of the present disclosure is applied can be reduced.

A molded body according to a third embodiment of the present disclosure is described.

The molded body according to the third embodiment of the present disclosure is a molded body including the first copolymer, which is the polyester resin according to the first embodiment, and a second copolymer. The molded body can have at least one shape selected from a sheet shape, a film shape, and a container shape, for example.

Descriptions regarding the polyester resin according to the first embodiment are as described above.

The second copolymer is a polyester resin acquired by polymerizing an acid component (C) and an alcohol component (D). The conponent (D) includes at least one selected from a group consisting of 1,4-butanediol and polytetramethylene glycol.

In the present disclosure, the acid component (C) may include a polycarboxylic acid component which is a compound having multiple carboxylic groups and/or a derivative thereof. Moreover, the alcohol component (D) may include a polyol component which is a compound having multiple hydroxy groups (a polyhydroxy compound) and/or a derivative thereof.

[Acid component (C)]

The acid component (C) includes at least one selected from a group consisting of a terephthalic acid component and a 2,6-naphthalenedicarboxylic acid component.

When the the terephthalic acid component is the main component of the component (C), the terephthalic acid component may be, for example, 50 mol% or greater, 55 mol% or greater, 60 mol% or greater, 65 mol% or greater, 70 mol% or greater, 75 mol% or greater, 80 mol% or greater, 85 mol% or greater, 90 mol% or greater, or 95 mol% or greater, with respect to the total amount of the component (C). When the terephthalic acid component is less than 50 mol%, the properties of polybutylene terephthalate and polyethylene terephthalate may be lost. The terephthalic acid component may be, for example, 98 mol% or lower, 95 mol% or lower, 92 mol% or lower, 90 mol% or lower, 85 mol% or lower, 80 mol% or lower, 75 mol% or lower, 70 mol% or lower, or 65 mol% or lower, with respect to the total amount of the component (C). In the component (C), the terephthalic acid component may be 100 mol%.

When the 2,6-naphthalenedicarboxylic acid component is the main component of the component (C), the 2,6-naphthalenedicarboxylic acid component may be, for example, 50 mol% or greater, 55 mol% or greater, 60 mol% or greater, 65 mol% or greater, 70 mol% or greater, 75 mol% or greater, 80 mol% or greater, 85 mol% or greater, 90 mol% or greater, or 95 mol% or greater, with respect to the total amount of the compoenent (C). When the 2,6-naphthalenedicarboxylic acid component is less than 50 mol%, the properties of polybutylene naphthalate may be lost. The 2,6-naphthalenedicarboxylic acid component may be, for example 98 mol% or lower, 95 mol% or lower, 92 mol% or lower, 90 mol% or lower, 85 mol% or lower, 80 mol% or lower, 75 mol% or lower, 70 mol% or lower, or 65 mol% or lower, with respect to the total amount of the component (C). In the component (C), the 2,6-naphthalenedicarboxylic acid component may be 100 mol%.

The acid component (C) may include other acid components other than the terephthalic acid component and the 2,6-naphthalenedicarboxylic acid component within a range of not changing the inherent properties of the polyester resin of the present disclosure. Examples of the other acid components include: an aromatic dicarboxylic acid component such as isophthalic acid, 1,4-naphthalenedicarboxylic acid, 4,4'-diphenyldicarboxylic acid, and 9,9-bis(2-carboxyethyl)fluorene; an aliphatic dicarboxylic acid component such as succinic acid, glutaric acid, adipic acid, pyruvic acid, suberic acid, azelaic acid, and sebacic acid; and an alycyclic dicarboxylic acid component such as 1,2-cyclohexanedicarboxylic acid, 1,3-cyclohexanedicarboxylic acid, 1,4-cyclohexanedicarboxylic acid, 1,4-decahydronaphthalenedicarboxylic acid, 1,5-decahydronaphthalenedicarboxylic acid, 2,6-decahydronaphthalenedicarboxylic acid, and 2,7-decahydronaphthalenedicarboxylic acid. These acid components may be used alone, or in combination of two or more types.

In the acid component (C), the total amount of at least either of the terephthalic acid component and the 2,6-naphthalenedicarboxylic acid component, and the isophthalic acid component may be 100 mol%.

[Alcohol component (D)]

The alcohol component (D) includes at least one selected from a group consisting of a 1,4-butanediol component and a polytetramethylene glycol component.

The 1,4-butanediol component is preferably 80 mol% or greater, more preferably 85 mol% or greater, still more preferably 90 mol% or greater, and particularly preferably 95 mol% or greater, with respect to the total amount of the component (D). The 1,4-butanediol component may be 95 mol% or lower, 90 mol% or lower, or 85 mol% or lower, with respect to the total amount of the component (D). The 1,4-butanediol component may be 100 mol% with respect to the total amount of the component (D). When the 1,4-butanediol component is less than 80 mol%, the properties of PBT or PBN may be lost.

The polytetramethylene glycol component may be 5 mol% or greater, 10 mol% or greater, or 15 mol% or greater, with respect to the total amount of the component (D). The polytetramethylene glycol component may be 30 mol% or lower, 25 mol% or lower, 20 mol% or lower, 15 mol% or lower, or 10 mol% or lower, with respect to the total amount of the component (D).

When the component (D) includes the polytetramethylene glycol component, the remaining component (D) may be 1,4-butanediol or ethylene glycol.

The alcohol component (D) may include alcohol components other than the 1,4-butanediol component and the polytetramethylene glycol component within the range of not changing the inherent properties of the polyester resin of the present disclosure. Examples of the other alcohol components include an ethylene glycol component, a 1,4-cyclohexanedimethanol component, a propylene glycol component, a hexanediol component, an otanediol component, a decanediol component, an ethylene oxide adduct-type bisphenol A component, an ethylene oxide adduct-type bisphenol S component, and a trimethylol propane component. These other alcohol components may be used alone, or in combination of two or more types.

Examples of the second copolymer include polybutylene terephthalate, polybutylene naphthalate, polybutylene terephthalate in which isophthalic acid is copolymerized, polybutylene terephthalate in which polytetramethylene glycol is copolymerized, and polyethylene terephthalate in which polytetramethylene glycol is copolymerized.

The generation amount of THF outgas from the second copolymer may be 100 $\mu$g or greater or 200 $\mu$g or greater, with respect to 1 g of the polyester resin, in a state that heat treatment of 50°C or greater is not performed after production of the polyester resin, and before being mixed with the first copolymer, e.g., in a state of pellets. The generation amount of THF outgas from the second copolymer may be 3,000 $\mu$g or lower or 2,000 $\mu$g or lower, with respect to 1 g of the polyester resin, in a state that heat treatment of 50°C or greater is not performed after production of the polyester resin, and before being mixed with the first copolymer, e.g., in a state of pellets.

In the second copolymer, tetrahydrofuran that is generated when it is heated at 150°C for one hour is preferably 150 $\mu$g to 600 $\mu$g per 1 g of the polyester resin.

In the molded body according to the third embodiment, the first copolymer may be 5% by mass or greater, 10% by mass or greater, 20% by mass or greater, 30% by mass or greater, 40% by mass or greater, or 50% by mass or greater, with respect to the mass of the molded body according to the third embodiment. The first copolymer may be 70% by mass or lower, 60% by mass or lower, 50% by mass or lower, 40% by mass or lower, 30% by mass or lower, 20% by mass or lower, or 10% by mass or lower, with respect to the mass of the molded body according to the third embodiment.

In the molded body according to the third embodiment, the second copolymer may be 30% by mass or greater, 40% by mass or greater, 50% by mass or greater, 60% by mass or greater, 70% by mass or greater, 80% by mass or greater, or 90% by mass or greater, with respect to the mass of the molded body according to the third embodiment. The second copolymer may be 95% by mass or lower, 90% by mass or lower, 80% by mass or lower, 70% by mass or lower, 60% by mass or lower, or 50% by mass or lower, with respect to the mass of the molded body according to the third embodiment.

In the molded body according to the third embodiment, the total amount of the first copolymer and the second copolymer may be 100% by mass.

The generation amount of THF outgas from the molded body according to the third embodiment is 50 $\mu$g or lower (50 ppm or lower), preferably 40 $\mu$g or lower, more preferably 30 $\mu$g or lower, still more preferably 20 $\mu$g or lower, particularly preferably 10 $\mu$g or lower, more particularly preferably 5 $\mu$g or lower, and most preferably below the detection limit, with respect to 1 g of the molded body, when heated at 150°C for one hour.

The molded body according to the third embodiment may include wll-known additives within the range of not changing the inherent properties of the molded body according to the third embodiment. Additives such as polymerization catalysts, antistatic agents, UV absorbers, thermal stabilizers, light stabilizers, mold-release agents, antioxidants, lubricants, plasticizers, pigments, and dyes may be used, for example.

According to the molded body according to the third embodiment, even when the second copolymer including a large amount of THF is mixed, the generation amount of THF outgas is reduced. The second copolymer including at least one selected from a group consisting of a 1,4-butanediol component and polytetramethylene glycol includes THF produced as a byproduct when it is produced in a usual method. However, when the first copolymer and the second copolymer are mixed and molded, THF can be removed at molding. Accordingly, the generation amount of THF outgas from the molded body according to the third embodiment can be reduced.

The molded body according to the third embodiment can be used as an electric/electronic material, an automotive part, or a packaging material, for example.

Examples of the electric/electronic material include: mold-release films used for producing various electric/-electronic components; protective films used for various electric/electronic components; and various electric/electronic molded products such as touch panels, sensors, and connectors.

Examples of the automotive part include: interior items such as instrumental panels, consols, door trims, head rests, tool boxes, luggage boxes, and sun visors; exterior items such as bumpers, rear spoilers, front lids, and fenders; decorative films for interior/exterior items, and protective films for interior/exterior items.

Examples of the packaging material include various packaging films such as container packaging materials, packagings for food, packagings for pharmaceuticals, packagings for industrial chemicals, packagings for precision electronic components, and packagings for pesticides.

As a fourth embodiment of the present disclosure, a method for producing a molded body for producing the molded body according to the third embodiment is described.

The method for producing a molded body according to the fourth embodiment of the present disclosure comprises:

a first step of preparing a first copolymer acquired by polymerizing an acid component including 50 mol% or greater of an aromatic dicarboxylic acid component and 2 mol% to 50 mol% of a dimer acid component, with respect to the total amount of the acid component, and an alcohol component including 50 mol% or greater of a 1,4-butanediol component, with respect to the total amount of the alcohol component;

a second step of performing heat treatment to the first copolymer at a pressure of 4,000 Pa or lower, at 66°C or greater and a temperature equal to or lower than the melting point of the first copolymer; and

a third step of molding a mixture of 5% by mass to 95% by mass of the first copolymer and 5% by mass to 95% by mass a second copolymer.

The first step and the second step are the same as the first step and the second step in the method for producing the polyester resin according to the second embodiment.

The second copolymer is a polyester resin including at least one selected from a group consisting of 1,4-butanediol and polytetramethylene glycol as an alcohol component.

As the molding method in the third step, for example, well-known molding methods such as injection molding, blow molding, extrusion molding, and bonding may be used. The molded body may have at least one shape selected from a sheet shape, a film shape, and a container shape, for example.

Tetrahydrofuran generated when the molded body acquired in the third step is heated at 150°C for one hour is preferably 50 μg or lower per 1 g of the molded body.

Tetrahydrofuran generated when the second copolymer is heated at 150°C for one hour is preferably 150 μg to 600 μg per 1 g of the polyester resin.

Here, Figure 2 shows a flowchart of the method for producing the molded body according to the fourth embodiment.

The method for producing the molded body according to the fourth embodiment may comprise a step of preparing a first copolymer (S21, S22), a step of preparing a second copolymer (S23), and a step of mixing the first copolymer and the second copolymer (S24). That is, the method for producing the molded body according to the fourth embodiment may comprise a step of mixing the polyester resin according to the first embodiment and the second copolymer according to the second embodiment. S21 to S23 may be in any order.

As for the method for producing the first copolymer, the method for producing the polyester resin according to the second embodiment is used.

The second copolymer can be produced by a well-known method depending on its composition. Moreover, the second copolymer may be a commercially available product.

A step of producing the molded moby by heating and melting the mixture of the first copolymer and the second copolymer at a temperature of, for example, 200°C or greater, or 220°C or greater may be comprised. Examples of the molded body may include a sheet, a film and a container.

According to the method for producing the molded body according to the fourth embodiment, even when THF is included in the second copolymer, THF can be removed at molding the mixture with the first copolymer. Accordingly, the molded body in which the generation amount of THF outgas is small can be produced when the polyester resin having a large THF content is used as a base.

Examples

In the following, the polyester resin and the production method thereof, and the molded body and the production method thereof of the present disclosure are described with reference to the examples. However, the polyester resin and the production method thereof, and the molded body and the production method thereof of the present disclosure are not limited to the following examples. Analysis of the composition of the polyester resin by NMR was performed by the following method.

<Method for analysing composition of polyester resin by NMR>

FT-NMR apparatus (DPX 400) manufactured by Bruker BioSpin was used to calculate a resin composition from NMR spectrum by dissolving the polyester resin to deuterated chloroform, mixing tetramethylsilane as an authentic sample thereto, and measuring a proton NMR spetrum.

[Test examples 1 to 10]

In Test examples 1 to 10, a mixture including 100 mol% of dimethyl terephthalate or 100 mol% in total of dimethyl terephthalate and dimer acid (manufactured by Croda International plc, Pripol 1004) which is a dimer of C22 erucic acid, or dimer acid (manufactured by Croda International plc, Pripol 1009) which is a dimer of C18 unsaturated fatty acid as the acid component, and 100 mol% of 1,4-butanediol as the alcohol component was prepared in a reactor equipped with a stirrer, a rectification column, and a methanol distillation condensor. After dissolving the mixture to a solvent at 190°C, 35 ppm of tetra-n-butoxytitanium was added thereto, and the temperature was raised from 190°C to 225°C in 3 hours. While distillating the generated methanol out of the system, a transesterification reaction was conducted. After completion of the transesterification reaction, the temperature was gradually raised from 225°C to 235°C in 60 minutes, and the pressure was gradually reduced from normal pressure to 0.2 kPa to complete the reaction at a predetermined viscosity. Then, it was extruded into cooled water, and cut into pellets using a strand cutter. Table 1 and Table 2 show the preparation compositions of each Test example and the compositions of the polyester resin analyzed by NMR. The intrinsic viscosity of the acquired polymer was 0.65 to 2.0 dl/g.

[Test examples 11 to 13]

In Test examples 11 to 13, the polyester resin in which polytetramethylene glycol was copolymerized to polybutylene terephthalate was produced. Except that the compositions are different, the production method is the same as in Test examples 1 to 10. Table 3 shows the preparation compositions of each Test example, and the compositions of the polyester resins analyzed by NMR.

[Test examples 14 to 21]

In Test examples 14 to 21, except that 100 mol% in total of dimethyl 2,6-naphthalenedicarboxylate and dimer acid (manufactured by Croda International plc, Pripol 1004) which is a dimer of C22 erucic acid were used as the acid component, the production method is the same as in Test examples 1 to 10. Table 4-1 and Table 4-2 show the preparation compositions of each Test example, and the compositions of the polyester resins analyzed by NMR.

Next, heat treatment was performed to the acquired pellets under the conditions shown in Table 1 to Table 4-2. Heating in Test example 6 was performed under atmospheric pressure of nitrogen atmosphere. The melting point of the polyester resin before heat treatment was measured as follows. Moreover, the generation amount of THF outgas was measured as follows, and the reduction rate of the generation amount of THF outgas was calculated as follows.

<Measurement of melting point>

Using 10 mg of the polyester resin, the melting point Tm was determined from DSC curve measured at a heating rate of 10°C/minute with a Differential Scanning Calorimetry DSC (manufactured by Perkin Elmer, DSC7).

<Measurement of generation amount of THF outgas and Calculation of reduction rate of generation amount of THF outgas>

The generation amount of THF outgas was measured for the polyester resin before heat treatment and the polyester resin after heat treatment. The polyester resin after heat treatment is not the polyester resin of which the generation amount of THF outgas was measured before heat treatment, but the polyester resin of the same lot as the polyester resin before heat treatment. The polyester resin was freezed and pulverized to acquire 30 to 50 mesh powder. 20 mg of the powder was sealed in a 25 ml vial bottle, and stored at 150°C for one hour. A gas chromatography GC-14A manufacutred by Shimadzu Corporation was used to measure the generation amount of THF outgas by headspace gas chromatography. The detection limit of the generation amount of THF outgas is 0.1 $\mu$g (0.1 ppm) per 1 g of the polyester resin.

The reduction rate of the generation amount of THF outgas was calculated by the following equation.

Reduction rate of Generation amount of THF outgas (%) = {(Generation amount of THF outgas before heat treatment - Generation amount of THF outgas after heat treatment) / Generation amount of THF outgas before heat treatment} x 100

Abbreviations used in Table 1 to Table 5 are as follows.

TPA: Terephthalic acid component
DA (C44): Dimer acid component having 44 carbon atoms
DA (C36): Dimer acid component having 36 carbon atoms
NDCA: 2,6-naphthalenedicarboxylic acid component
BD: 1,4-butanediol component
PTMG: Polytetramethylene glycol component

[Table 1]

| | | | Test example | | | | |
|---|---|---|---|---|---|---|---|
| | | | 1 | 2 | 3 | 4 | 5 |
| Composition (preparation) | Acid component (mol%) | TPA | 100 | 95 | 90 | 90 | 90 |
| | | DA(C44) | 0 | 5 | 10 | 10 | 10 |
| | | DA(C36) | - | - | - | - | - |
| | Alcohol component (mol%) | BD | 100 | 100 | 100 | 100 | 100 |
| Composition (NMR analysis result) | Acid component (mol%) | TPA | 100 | 95 | 90 | 90 | 90 |
| | | DA(C44) | 0 | 5 | 10 | 10 | 10 |
| | | DA(C36) | - | - | - | - | - |
| | Alcohol component (mol%) | BD | 100 | 100 | 100 | 100 | 100 |
| Melting point (°C) | | | 225 | 216 | 207 | 207 | 207 |
| THF generation amount before heat treatment (ppm) | | | 611 | 219 | 221 | 221 | 221 |
| Heating condition | Pressure (Pa) | | 280 | 280 | 280 | 280 | 280 |
| | Temperature (°C) | | 120 | 120 | 120 | 70 | 70 |
| | Time (hours) | | 12 | 12 | 12 | 45 | 70 |
| THF generation amount after heat treatment (ppm) | | | 515 | 0. 1 | 0.2 | 1.0 | 0.4 |
| THF reduction rate (%) | | | 15.71 | 99. 95 | 99. 91 | 99. 28 | 99. 82 |

[Table 2]

| | | | Test example | | | | |
|---|---|---|---|---|---|---|---|
| | | | 6 | 7 | 8 | 9 | 10 |
| Composition (preparation) | Acid component (mol%) | TPA | 90 | 80 | 60 | 90 | 90 |
| | | DA(C44) | 10 | 20 | 40 | - | - |
| | | DA(C36) | - | - | - | 10 | 10 |
| | Alcohol component (mol%) | BD | 100 | 100 | 100 | 100 | 100 |
| Composition (NMR analysis result) | Acid component (mol%) | TPA | 90 | 80 | 60 | 90 | 90 |
| | | DA(C44) | 10 | 20 | 40 | - | - |
| | | DA(C36) | - | - | - | 10 | 10 |
| | Alcohol component (mol%) | BD | 100 | 100 | 100 | 100 | 100 |
| Melting point (°C) | | | 207 | 189 | 152 | 205 | 205 |
| THF generation amount before heat treatment (ppm) | | | 221 | 231 | 224 | 464 | 464 |
| Heating condition | Pressure (Pa) | | 0.1M | 280 | 280 | 280 | 280 |
| | Temperature (°C) | | 120 | 120 | 120 | 120 | 120 |
| | Time (hours) | | 120 | 12 | 12 | 12 | 24 |

(continued)

| | Test example | | | | |
|---|---|---|---|---|---|
| | 6 | 7 | 8 | 9 | 10 |
| THF generation amount after heat treatment (ppm) | 14 | 0.3 | 0.2 | 1 | 0.2 |
| THF reduction rate (%) | 93. 67 | 99. 87 | 99. 91 | 99. 78 | 99. 96 |

[Table 3]

| | | | Test example | | |
|---|---|---|---|---|---|
| | | | 11 | 12 | 13 |
| Composition (preparation) | Acid component (mol%) | TPA | 100 | 100 | 100 |
| | Alcohol component (mol%) | BD | 90 | 85 | 80 |
| | | PTMG | 10 | 15 | 20 |
| Composition (NMR analysis result) | Acid component (mol%) | TPA | 100 | 100 | 100 |
| | Alcohol component (mol%) | BD | 90 | 85 | 80 |
| | | PTMG | 10 | 15 | 20 |
| Melting point (°C) | | | 219 | 217 | 214 |
| THF generation amount before heat treatment (ppm) | | | 985 | 1197 | 1675 |
| Heating condition | Pressure (Pa) | | 280 | 280 | 280 |
| | Temperature (°C) | | 120 | 120 | 120 |
| | Time (hours) | | 12 | 12 | 12 |
| THF generation amount after heat treatment (ppm) | | | 678 | 890 | 1368 |
| THF reduction rate (%) | | | 31. 17 | 25. 65 | 18.33 |

[Table 4-1]

| | | | Test example | | | |
|---|---|---|---|---|---|---|
| | | | 14 | 15 | 16 | 17 |
| Composition (preparation) | Acid component (mol%) | NDCA | 100 | 95 | 90 | 80 |
| | | DA(C44) | 0 | 5 | 10 | 20 |
| | Alcohol component (mol%) | BD | 100 | 100 | 100 | 100 |
| Composition (NMR analysis result) | Acid component (mol%) | NDCA | 100 | 95 | 90 | 80 |
| | | DA(C44) | 0 | 5 | 10 | 20 |
| | Alcohol component (mol%) | BD | 100 | 100 | 100 | 100 |
| Melting point (°C) | | | 243 | 236 | 229 | 207 |
| THF generation amount before heat treatment (ppm) | | | 526 | 315 | 234 | 256 |
| Heating condition | Pressure (Pa) | | 280 | 280 | 280 | 280 |
| | Temperature (°C) | | 120 | 120 | 120 | 120 |
| | Time (hours) | | 12 | 12 | 12 | 12 |
| THF generation amount after heat treatment (ppm) | | | 350 | 0. 1 | 0.2 | 0.3 |
| THF reduction rate (%) | | | 33. 46 | 99. 97 | 99. 91 | 99. 88 |

[Table 4-2]

| | | | Test example | | | |
|---|---|---|---|---|---|---|
| | | | 18 | 19 | 20 | 21 |
| Composition (preparation) | Acid component (mol%) | NDCA | 50 | 90 | 90 | 90 |
| | | DA(C44) | 50 | 10 | 10 | 10 |
| | Alcohol component (mol%) | BD | 100 | 100 | 100 | 100 |
| Composition (NMR analysis result) | Acid component (mol%) | NDCA | 50 | 90 | 90 | 90 |
| | | DA(C44) | 50 | 10 | 10 | 10 |
| | Alcohol component (mol%) | BD | 100 | 100 | 100 | 100 |
| Melting point (°C) | | | 156 | 205 | 205 | 205 |
| THF generation amount before heat treatment (ppm) | | | 264 | 464 | 464 | 464 |
| Heating condition | Pressure (Pa) | | 280 | 280 | 280 | 280 |
| | Temperature (°C) | | 120 | 70 | 120 | 120 |
| | Time (hours) | | 12 | 12 | 12 | 24 |
| THF generation amount after heat treatment (ppm) | | | 0.2 | 37 | 1.0 | 0.2 |
| THF reduction rate (%) | | | 99.92 | 92.02 | 99.78 | 99.96 |

From the results of Table 1 to Table 4-2, in Test example 1 in which neither dimer acid nor polytetramethylene glocol was used as the monomer, reduction in the generation amount of THF outgas was small. Moreover, in Test examples 11 to 13 in which polytetramethylene glycol was used as the monomer, reduction in the generation amount of THF outgas was also small. On the other hand, in Test examples 2 to 10 in which dimer acid was used as the monomer, the generation amount of THF outgas was largely reduced. In particular, the generation amount of THF outgas was reduced to an amount near the detection limit by heating under reduced pressure. In Test example 6 in which heat treatment was performed under atmospheric pressure, although the heating time was 10 times longer than that of Test example 3, the generation amount of THF outgas could not be reduced to the same level as in Test example 3. In Test examples 4 to 5, the generation amount of THF outgas could be reduced even when the heating temperature was 70°C. The generation amount of THF outgas could be reduced more with dimer acid having 44 carbon atoms than with dimer acid having 36 carbon atoms. Moreover, in Test examples 15 to 21 in which 2,6-naphthalenedicarboxylic acid and dimer acid were used as the monomer, reduction in the generation amount of THF outgas was small like in Test examples 1 to 10.

[Test examples 22 to 25]

After performing heat treatment to the polyester resins of Test examples 3 and 8 that are in the form of pellets, the polyester resin was molded into a sheet having a thickness of 100 $\mu$g to measure the generation amount of THF outgas. As for the method for molding into a sheet, the polyester resin was melt-extruded at a temperature of 250°C using a T-die extruder, which is a general method for producing a polyester sheet, and wound to a cast roll in which its temperature is controlled at 20°C to acquire a molded body in the form of a sheet. The method for measuring the generation amount of THF outgas was the same as in Test examples 1 to 10. "Undetectable" in Table 5 indicates that it was below the detection limit.

[Table 5]

| | | | Test example | | | |
|---|---|---|---|---|---|---|
| | | | 22 | 23 | 24 | 25 |
| Composition (preparation) | Acid component (mol%) | TPA | 90 | 90 | 60 | 60 |
| | | DA(C44) | 10 | 10 | 40 | 40 |
| | Alcohol component (mol%) | BD | 100 | 100 | 100 | 100 |

EP 4 772 559 A1

(continued)

|  |  |  | Test example | | | |
|---|---|---|---|---|---|---|
|  |  |  | 22 | 23 | 24 | 25 |
| Composition (NMR analysis result) | Acid component (mol%) | TPA | 90 | 90 | 60 | 60 |
|  |  | DA(C44) | 10 | 10 | 40 | 40 |
|  | Alcohol component (mol%) | BD | 100 | 100 | 100 | 100 |
| Heating condition | Pressure (Pa) | | 280 | 280 | 280 | 280 |
|  | Temperature (°C) | | 120 | 120 | 120 | 120 |
|  | Time (hours) | | 12 | 12 | 12 | 12 |
| Molding | Molding temperature (°C) | | 250 | 240 | 210 | 230 |
| THF generation amount (ppm) | | | Undetectable | | | |

From the results of Table 5, generation of THF outgas could not be confirmed from the polyestre resin in the form of a film, regardless of the molding temperature.

[Test examples 26 to 47]

The copolymer of Test examples 2, 3, 7, 8, and 11 to 13 after heat treatment (represented as "first copolymer" in Table 6) and polybutylene terephthalate of Test example 1 after heat treatment (represented as "second copolymer" in Table 6) were mixed to mold it into a sheet. The generation amount of THF outgas for the molded sheet was measured. Heat treatment of 50°C or greater was not performed before measurement after molding. Table 6 shows a mixing ratio (mass ratio) of the first copolymer and the second copolymer, and the generation amount of THF outgas.
As for molding into a sheet, a mixture acquired by mixing the first copolymer and the second copolymer at a mass ratio shown in Table 6 was melt-extruded at a temperature of 250°C using a T-die extruder, which is a general method for producing a polyester sheet, and wound to a cast roll in which its temperature is controlled at 20°C to acquire a molded body in the form of a sheet. In Test examples in which two types of copolymers were not mixed, they were molded into a sheet with a single copolymer in the same manner.

[Table 6]

| Test example | First copolymer | Second copolymer | Mixing ratio (First copolymer/Second copolymer) | THF generation amount (ppm) |
|---|---|---|---|---|
| 26 | - | Test example 1 | 0/100 | 431 |
| 27 | Test example 2 | Test example 1 | 10/90 | 28 |
| 28 |  | Test example 1 | 50/50 | 16 |
| 29 |  | - | 100/0 | Below detection limit |
| 30 | Test example 3 | Test example 1 | 10/90 | 29 |
| 31 |  | Test example 1 | 50/50 | 16 |
| 32 |  | - | 100/0 | Below detection limit |
| 33 | Test example 7 | Test example 1 | 10/90 | 30 |
| 34 |  | Test example 1 | 50/50 | 17 |
| 35 |  | - | 100/0 | Below detection limit |
| 36 | Test example 8 | Test example 1 | 10/90 | 27 |
| 37 |  | Test example 1 | 50/50 | 15 |
| 38 |  | - | 100/0 | Below detection limit |

(continued)

| Test example | First copolymer | Second copolymer | Mixing ratio (First copolymer/Second copolymer) | THF generation amount (ppm) |
|---|---|---|---|---|
| 39 | Test example 11 | Test example 1 | 10/90 | 456 |
| 40 | | Test example 1 | 50/50 | 555 |
| 41 | | - | 100/0 | 567 |
| 42 | Test example 12 | Test example 1 | 10/90 | 477 |
| 43 | | Test example 1 | 50/50 | 661 |
| 44 | | - | 100/0 | 745 |
| 45 | Test example 13 | Test example 1 | 10/90 | 525 |
| 46 | | Test example 1 | 50/50 | 900 |
| 47 | | - | 100/0 | 1145 |

From the results of Table 6, in Test example 26, the generation amount of THF outgas could not be reduced even when polybutylene terephthalate alone was molded into the form of a sheet. Moreover, in Test examples 39 to 47, the generation amount of THF outgas was still large in the mixture of the polyester resin including the polytetramethylene glycol component and polybuthylene terephthalate. On the other hand, in Test examples 27 to 38, the generation amount of THF outgas could be largely reduced by molding the polyester resin including dimer acid into a sheet. Even when 50 mol% or greater is polybutylene terephthalate that includes a large amount of THF, THF could be reduced at molding into a sheet.

[Test examples 48 to 63]

The copolymer of Test examples 15 to 21 after heat treatment (represented as "first copolymer" in Table 7) and polybutylene naphthalate of Test example 14 after heat treatment (represented as "second copolymer" in Table 7) were mixed to mold it into a sheet. The generation amount of THF outgas was measured for the molded sheet. Heat treatment of 50°C or greater was not performed before measurement after molding. Table 7 shows the mixing ratio (mass ratio) of the first copolymer and the second copolymer, and the generation amount of THF outgas.

[Table 7]

| Test example | First copolymer | Second copolymer | Mixing ratio (First copolymer/Second copolymer) | THF generation amount (ppm) |
|---|---|---|---|---|
| 48 | - | Test example 14 | 0/100 | 335 |
| 49 | Test example 15 | Test example 14 | 10/90 | 26 |
| 50 | | Test example 14 | 50/50 | 18 |
| 51 | | - | 100/0 | Below detection limit |
| 52 | Test example 16 | Test example 14 | 10/90 | 25 |
| 53 | | Test example 14 | 50/50 | 21 |
| 54 | | - | 100/0 | Below detection limit |
| 55 | Test example 17 | Test example 14 | 10/90 | 32 |
| 56 | | Test example 14 | 50/50 | 19 |
| 57 | | - | 100/0 | Below detection limit |
| 58 | Test example 18 | Test example 14 | 10/90 | 33 |
| 59 | | Test example 14 | 50/50 | 21 |
| 60 | | - | 100/0 | Below detection limit |

(continued)

| Test example | First copolymer | Second copolymer | Mixing ratio | THF generation amount (ppm) |
| --- | --- | --- | --- | --- |
| | | | (First copolymer/Second copolymer) | |
| 61 | Test example 19 | Test example 14 | 10/90 | 30 |
| 62 | Test example 20 | Test example 14 | 10/90 | 16 |
| 63 | Test example 21 | Test example 14 | 10/90 | 15 |

From the results of Table 7, in Test example 48, the generation amount of THF outgas could not be reduced even when polybutylene naphthapate alone was molded into a sheet. Moreover, in Test examples 49 to 63, the generation amount of THF outgas could be largely reduced by molding the polyester resin including dimer acid into a sheet. Even when 50 mol% or greater is polybutylene terephthalate that includes a large amount of THF, THF could be reduced at molding into a sheet.

The polyester resin and the production method thereof are described based on the above-described embodiments and examples; however, the present disclosure is not limited to the above-described embodiments and examples and may encompass various transformations, modifications, and improvements made to the various disclosed elements (including elements disclosed in the Claims, Description, and Drawings) within the scope of the present invention and based on the fundamental technical idea of the present invention. Moreover, various combinations, substitutions, and selections of the various disclosed elements are possible within the scope of the Claims of the present invention.

Further issues, objectives, and embodiments (including modifications) of the present invention are revealed also from the entire disclosure of the present invention including the Claims.

The numerical ranges disclosed herein are to be construed in such a manner that arbitrary numerical values and ranges falling within the disclosed ranges are treated as being concretely described herein, even where not specifically stated.

Some or all of the above-described embodiments may be described as in the following additional features, but are not limited to the following descriptions. Each additional feature can also be combined with each claim described in the Claims.

[Additional feature 1]

A use method of adding the polyester resin according to the first embodiment to a polyester resin that includes at least one selected from a group consisting of 1,4-butanediol and polytetramethylene glycol as an alcohol component.

Industrial Applicability

The polyester resin and the production method thereof, and the molded body and the production method thereof of the present disclosure can be applied to various molded products, and preferably applied to electric/electronic materials, automotive parts, or packaging materials, in particular.

Claims

1.   A polyester resin, comprising a first copolymer,

wherein the first copolymer is acquired by polymerizing an acid component containing 50 mol% or more of an aromatic dicarboxylic acid component and 2 mol% to 50 mol% of a dimer acid component, with respect to the total amount of the acid component, and an alcohol component containing 50 mol% or more of a 1,4-butanediol component with respect to the total amount of the alcohol component,
wherein tetrahydrofuran generated when the first copolymer is heated at 150°C for 1 hour is 1 μg or less per 1 g of the first copolymer.

2.   The polyester resin according to claim 1, wherein tetrahydrofuran generated when the first copolymer, to which heat treatment at 50°C or greater is not performed, is heated at 150°C for one hour is 1 μg or lower per 1 g of the first copolymer.

3.   The polyester resin according to claim 1 or 2, wherein tetrahydrofuran generated when the first copolymer is heated at 150°C for one hour is 0.5 μg or lower per 1 g of the first copolymer.

4. The polyester resin according to any one of claims 1 to 3, wherein the acid component consists of a terephthalic acid component and a dimer acid component, or a 2,6-naphthalenedicarboxylic acid component and a dimer acid component, and
the alcohol component consists of a 1,4-butanediol component.

5. The polyester resin according to any one of claims 1 to 4, wherein the number of carbon atoms of the dimer acid component is at least one selected from a group consisting of 44 and 36.

6. A method for producing a polyester resin, comprising

a first step of preparing a first copolymer acquired by polymerizing an acid component including 50 mol% or greater of an aromatic dicarboxylic acid and 2 mol% to 50 mol% of a dimer acid component, with respect to the total amount of the acid component, and an alcohol component including 50 mol% or greater of a 1,4-butanediol component, with respect to the total amount of the alcohol component, and
a second step of performing heat treatment to the first copolymer under a pressure of 4,000 Pa or lower, at 66°C or greater and a temperature equal to or lower than the melting point of the first copolymer.

7. The method for producing the polyester resin according to claim 6, wherein the heat treatment is performed for 6 hours to 100 hours.

8. The method for producing the polyester resin according to claim 6 or 7, wherein the second step is performed before performing heat treatment to the first copolymer to 50°C or greater.

9. The method for producing the polyester resin according to any one of claims 6 to 8, wherein the acid component consists of a terephthalic acid component and a dimer acid component, or a 2,6-naphthalenedicarboxylic acid component and a dimer acid component, and
the alcohol component consists of a 1,4-butanediol component.

10. The method for producing the polyester resin according to any one of claims 6 to 9, wherein the number of carbon atoms of the dimer acid component is at least one selected from a group consisting of 44 and 36.

11. A molded body comprising the polyester resin according to any one of claims 1 to 5.

12. A molded body, comprising 5% by mass to 70% by mass of the polyester resin according to any one of claims 1 to 5, and 30% by mass to 95% by mass of a second copolymer,

wherein the second copolymer is a polyester resin including at least one selected from a group consisting of 1,4-butane diol and polytetramethylene glycol as an alcohol component, and
wherein tetrahydrofuran generated when the molded body is heated at 150°C for one hour is 50 μg or lower per 1 g of the molded body.

13. The molded body according to claim 12, wherein, in the second copolymer, tetrahydrofuran generated when it is heated at 150°C for one hour is 150 μg to 600 μg per 1 g of the polyester resin.

14. The molded body according to claim 12 or 13, wherein the molded body comprises at least one shape selected from a sheet shape, a film shape, and a container shape.

15. An electric/electronic material comprising the molded body according to any one of claims 11 to 14.

16. An automotive part comprising the molded body according to any one of claims 11 to 14.

17. A packaging material comprising the molded body according to any one of claims 11 to 14.

18. A method for producing a molded body, comprising

a first step of preparing a first copolymer acquired by polymerizing an acid component including 50 mol% or greater of an aromatic dicarboxylic acid component and 2 mol% to 50 mol% of a dimer acid component, with respect to the total amount of the acid component, and an alcohol component including 50 mol% or greater of a 1,4-butanediol component, with respect to the total amount of the alcohol component,

a second step of performing heat treatment to the first copolymer under a pressure of 4,000 Pa or lower, at 66°C or greater and a temperature equal to or lower than the melting point of the first copolymer, and

a third step of molding a mixture of 5% by mass to 95% by mass of the first copolymer and 5% by mass to 95% by mass of a second copolymer,

wherein the second copolymer is a polyester resin including at least one selected from a group consisting of 1,4-butanediol and polytetramethylene glycol as the alcohol component.

19. The method for producing the molded body according to claim 18, wherein, in the third step, the mixture is molded into at least one shape selected from a sheet shape, a film shape, and a container shape.

[FIG. 1]

Start

Prepare First copolymer — S11

Perform Heat treatment to First copolymer under Reduced pressure — S12

Finish

[FIG. 2]

Start

Prepare First copolymer — S21

Perform Heat treatment to First copolymer under Reduced pressure — S22

Prepare Second copolymer — S23

Mold Mixture of First copolymer and Second copolymer — S24

Finish

## INTERNATIONAL SEARCH REPORT

| International application No. |
| --- |
| **PCT/JP2024/029566** |

| A. | CLASSIFICATION OF SUBJECT MATTER |
| --- | --- |

*C08G 63/183*(2006.01)i; *C08G 63/123*(2006.01)i
FI:  C08G63/183; C08G63/123

According to International Patent Classification (IPC) or to both national classification and IPC

| B. | FIELDS SEARCHED |
| --- | --- |

Minimum documentation searched (classification system followed by classification symbols)

C08G63/183; C08G63/123

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2019-108513 A (MITSUBISHI CHEMICAL CORPORATION) 04 July 2019 (2019-07-04) claims, paragraphs [0008], [0031], [0036], examples | 1-19 |
| Y | JP 2022-510705 A (BASF SE) 27 January 2022 (2022-01-27) claims, examples | 1-19 |
| Y | WO 2017/148931 A1 (NOVAMONT S.P.A.) 08 September 2017 (2017-09-08) claims, examples | 1-19 |
| Y | JP 2019-151813 A (MITSUBISHI CHEMICAL CORPORATION) 12 September 2019 (2019-09-12) claims, examples | 6-10, 18-19 |
| A | JP 2018-145221 A (MITSUBISHI CHEMICAL CORPORATION) 20 September 2018 (2018-09-20) entire text | 1-19 |

✓ Further documents are listed in the continuation of Box C.  ✓ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/029566**

| C. | DOCUMENTS CONSIDERED TO BE RELEVANT | |
|---|---|---|
| Category* | Citation of document, with indication, where appropriate, of the relevant passages | Relevant to claim No. |
| A | WO 2017/183550 A1 (TOYOBO CO., LTD.) 26 October 2017 (2017-10-26)<br>entire text | 1-19 |

Form PCT/ISA/210 (second sheet) (July 2022)

## INTERNATIONAL SEARCH REPORT
### Information on patent family members

| International application No. |
| --- |
| **PCT/JP2024/029566** |

| Patent document cited in search report | | | Publication date (day/month/year) | Patent family member(s) | | | Publication date (day/month/year) |
| --- | --- | --- | --- | --- | --- | --- | --- |
| JP | 2019-108513 | A | 04 July 2019 | (Family: none) | | | |
| JP | 2022-510705 | A | 27 January 2022 | US | 2022/0033645 | A1 | |
| | | | | claims, examples | | | |
| | | | | WO | 2020/115221 | A1 | |
| | | | | EP | 3891208 | A1 | |
| | | | | CN | 112888724 | A | |
| WO | 2017/148931 | A1 | 08 September 2017 | US | 2019/0106536 | A1 | |
| | | | | claims, examples | | | |
| | | | | EP | 3214108 | A1 | |
| | | | | EP | 3423509 | A1 | |
| | | | | EP | 4141045 | A1 | |
| JP | 2019-151813 | A | 12 September 2019 | (Family: none) | | | |
| JP | 2018-145221 | A | 20 September 2018 | (Family: none) | | | |
| WO | 2017/183550 | A1 | 26 October 2017 | TW | 201807009 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023140521 A
- JP 2022543761 W
- WO 2011162198 A